# EUROPÄISCHE PATENTSCHRIFT

(11) **EP 1 565 360 B1**
(45) Veröffentlichungstag und Bekanntmachung des Hinweises auf die Patenterteilung: **08.08.2007**
(21) Anmeldenummer: 03767592.3
(22) Anmeldetag: 21.11.2003
(51) Int. Cl.: B60S 1/40

(54) **WISCHARM EINER WISCHVORRICHTUNG**
WIPER ARM OF A WIPER DEVICE
BRAS D'ESSUIE-GLACE POUR SYSTEME D'ESSUIE-GLACE

(30) Priorität: 28.11.2002 DE 10255576
(43) Veröffentlichungstag der Anmeldung: 24.08.2005
(73) Patentinhaber: VALEO SYSTEMES D'ESSUYAGE, 78321 La Verrière (FR)
(72) Erfinder: SCHÄUBLE, Michael, 74321 Bietigheim-Bissingen (DE); EGNER-WALTER, Bruno, 74076 Heilbronn (DE)
(74) Vertreter: Jahn, Wolf-Diethart
(86) Internationale Anmeldenummer: PCT/EP2003/013063
(87) Internationale Veröffentlichungsnummer: WO 2004/048164

(56) Entgegenhaltungen:
- WO-A-00/73113
- DE-A- 2 458 247
- DE-A- 10 038 992
- US-A- 4 083 642

## Beschreibung

Die Erfindung betrifft einen Wischarm einer Wischvorrichtung mit einem Kopplungsabschnitt zur Anbindung eines Flachwischblatts, wobei der Wischarm wenigstens abschnittsweise im Querschnitt U-artig, mit einem Rücken und zwei Seitenwänden, ausgebildet ist.

Ein derartiger Wischarm ist aus der WO 00/73113 A1 bekannt geworden. Der Kopplungsabschnitt eines derartigen Wischarms ist in der Herstellung sehr aufwändig. Neben dem Wischarm ist auch der Kopplungsabschnitt in dem Bereich, in dem ein quer zur Längsachse des Wischarms verlaufender Gelenkbolzen vorgesehen ist, im Querschnitt U-förmig ausgebildet. Dadurch ist die Realisierung des Kopplungsabschnittes fertigungstechnisch sehr aufwändig.

Der Kopplungsabschnitt des Wischarms dient zur Anbindung an ein Flachwischblatt, das eine der zu wischenden Scheibe zugewandte Wischleiste, wenigstens ein bandartig langgestrecktes Tragelement und einen Verbindungsabschnitt zur Anbindung an den Kopplungsabschnitt umfasst. Derartige Flachwischblätter, die keinen kaskadenartigen Bügelaufbau aufweisen, finden zunehmend Verbreitung. Sie bauen regelmäßig sehr flach und sehr schmal, was erhebliche Vorteile mit sich bringt.

Der vorliegenden Erfindung liegt die Aufgabe zugrunde, einen Wischarm mit einem Kopplungsabschnitt bereitzustellen, an den Flachwischblätter, wie sie insbesondere in der WO 00/73113 A1 beschrieben sind, anbindbar sind. Der Kopplungsabschnitt des Wischarms soll hierbei fertigungstechnisch auf einfache Art und Weise herstellbar sein.

Diese Aufgabe wird mit einem Wischarm der eingangs beschriebenen Art erfindungsgemäß dadurch gelöst, dass der Kopplungsabschnitt einen in Längsrichtung den Rücken und eine Seitenwand überragenden, freistehenden Wandabschnitt der anderen Seitenwand und einen an diesem Wandabschnitt befestigten Gelenkbolzen zur Kopplung mit einem Verbindungsabschnitt des Wischblatts umfasst. Dabei ist vorteilhaft, wenn der freistehende Wandabschnitt in geradliniger Verlängerung zu der Seitenwand, dessen Teil er ist, verläuft. Der Wandabschnitt liegt dann folglich in der Ebene der zugehörigen Seitenwand.

Dies hat den Vorteil, dass im Vergleich zum nächstliegenden Stand der Technik der Bereich des Kopplungsabschnitts, an dem der Gelenkbolzen angeordnet ist, lediglich einwandig freistehend ausgebildet ist. Hierdurch wird die Fertigung erheblich vereinfacht. Außerdem ist vorteilhaft, dass der Wischarm, beziehungsweise der Kopplungsabschnitt, schlanker baut, als der Kopplungsabschnitt des nächstliegenden Standes der Technik. Hierdurch kann eine Sichtbehinderung des Fahrzeuglenkers durch die Breite des Wischarms im Bereich des Kopplungsabschnitts minimiert werden.

Eine vorteilhafte Ausführungsform der Erfindung ergibt sich dann, wenn der Rücken in Querrichtung breiter ausgebildet ist, als der Gelenkbolzen in Querrichtung lang ist. Dadurch kann vorteilhafterweise erreicht werden, dass die Mittellängsachse des Wischarms weitgehend über der Mittellängsachse des Wischblatts liegt. Folglich kann eine Wischvorrichtung realisiert werden, die in Draufsicht auf die zu wischende Scheibe sehr schmal baut und für den Fahrzeuglenker lediglich eine geringe Sichtbeeinträchtigung darstellt.

Vorteilhaft ist, wenn der Rücken ein an dem Wischarm angeordnetes Wischblatt wenigstens weitgehend abdeckt. Dadurch wird der Teil des Wischblatts, der unter dem Rücken des Wischarms liegt, geschützt.

Eine sehr flach bauende Wischvorrichtung ergibt sich dann, wenn das Wischblatt wenigstens abschnittsweise zwischen den Seitenwänden des Wischarms angeordnet ist. Außerdem wird das Wischblatt hierdurch geschützt.

Bei einer anderen Ausführungsform der Erfindung kann vorgesehen sein, dass der Rücken in Querrichtung schmaler ausgebildet ist, als der Gelenkbolzen in Querrichtung lang ist. Dadurch kann eine Wischvorrichtung realisiert werden, die sehr flach baut.

Erfindungsgemäß kann vorgesehen sein, dass der Kopplungsabschnitt einen sich an den Rücken anschließenden, im Querschnitt L-förmigen Ansatz umfasst, der einen sich quer zur Längsrichtung erstreckenden Steg und einen parallel zum Wandabschnitt ausgebildeten Anschlag aufweist. Hierdurch wird eine fertigungstechnisch einfach zu realisierende Anbindung an ein aus der WO 00/73113 A1 bekanntes Wischblatt möglich. Der Steg kann dabei in der Ebene des Rückens verlaufen.

Gemäß der Erfindung kann vorgesehen sein, dass das Wischblatt im montierten Zustand seitlich neben dem Wischarm angeordnet ist. Ein derartiges Wischblatt hat den Vorteil, dass es flach baut.

Der Wischarm ist vorteilhafterweise so ausgebildet, dass der Gelenkbolzen mit dem Wandabschnitt vernietet ist, was fertigungstechnisch einfach zu realisieren ist.

Die eingangs genannte Aufgabe wird außerdem gelöst durch eine Wischvorrichtung, die einen erfindungsgemäßen Wischarm und ein an den Kopplungsabschnitt des Wischarms anbindbares Flachwischblatt umfasst.

Weitere Vorteile und vorteilhafte Ausgestaltungen der Erfindung sind der nachfolgenden Beschreibung zu entnehmen, in der die Erfindung anhand der in der Zeichnung dargestellten Ausführungsbeispiele näher beschrieben und erläutert ist.

### Es zeigen:

- Figur 1: einen Teilschnitt auf eine Draufsicht auf einen ersten erfindungsgemäßen Wischarm;
- Figur 2: einen Schnitt entlang der Linie II;
- Figur 3: einen Schnitt entlang der Linie III;
- Figur 4: die Draufsicht auf einen zweiten erfindungsgemäßen Wischarm; und
- Figur 5: eine Detaildarstellung des Gelenkbolzens der Wischarme gemäß den Figuren 1 und 4.

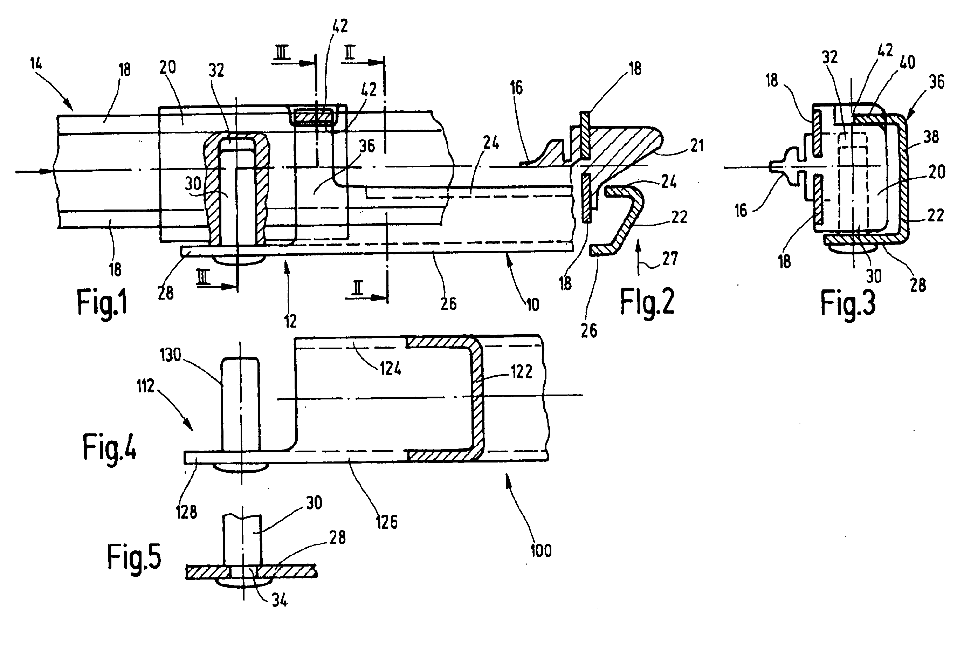

In der Figur 1 ist ein erfindungsgemäßer Wischarm 10 dargestellt, der einen Kopplungsabschnitt 12 zu Anbindung an ein abschnittsweise dargestelltes Flachwischblatt 14 umfasst. Das Flachwischblatt 14 weist eine der Scheibe zugewandte, in den Figuren 2 und 3 dargestellte, Wischleiste 16, zwei bandartig langgestreckte Tragelemente 18 und eine mit den Tragelementen 18 verbundene Verbindungseinheit 20 auf. Auf der der Wischleiste 16 abgewandten Seite ist ein spoilerartiger Ansatz 21 vorgesehen.

Wie aus Figur 2 deutlich wird, ist der Wischarm 10 im Querschnitt U-artig ausgebildet und weist einen Rücken 22 sowie zwei Seitenwände 24 und 26 auf. Der Rücken 22 verläuft allerdings nicht rechtwinklig zu den Seitenwänden 24 und 26, sondern ist in Richtung 27 der Seite, von der der Fahrtwind gegen den Wischarm 10 strömt, leicht geneigt.

Der Kopplungsabschnitt 12 umfasst einen in Längsrichtung den Rücken 22 und die Seitenwand 24 überragenden, freistehenden Wandabschnitt 28 und einen an dem Wandabschnitt 28, sich in Querrichtung erstreckenden Gelenkbolzen 30. Der Gelenkbolzen 30 greift in eine an der Verbindungseinheit 20 vorgesehene Aufnahme 32 in Form eines Sackloches ein. Im montierten Zustand ist das Wischblatt 14 um den Gelenkbolzen 30 wenigstens bedingt pendelbar angeordnet.

Der Gelenkbolzen 30 ist, wie aus Figur 5 deutlich wird, mit dem Wandabschnitt 28 vernietet. Dazu sieht der Wandabschnitt 28 ein Loch, beziehungsweise eine Bohrung 34, vor.

Dadurch, dass sich der Wandabschnitt 28 in Verlängerung der Seitenwand 26 erstreckt, sind keine separaten Herstellungsschritte für die Bereitstellung des Wandabschnitts 28 erforderlich. Der Wandabschnitt 28 liegt, wie aus der Figur 1 deutlich wird, in der Ebene der Seitenwand 26.

Aus den Figuren 1 und 3 ist erkennbar, dass der Kopplungsabschnitt 12 einen sich an den Rücken 22 anschließenden, im Querschnitt gemäß Figur 3 L-förmigen Ansatz 36 vorsieht. Der L-förmige Ansatz 36 weist hierbei einen sich quer zur Längsrichtung erstreckenden Steg 38 und einen parallel zum Wandabschnitt 28 ausgebildeten Anschlag 40 auf. Im montierten Zustand, wie er in der Figur 1 dargestellt ist, wirkt der Anschlag 40 mit einem seitlich an der Verbindungseinheit 20 eingelassenen Gegenanschlag 42 zusammen. Dadurch werden auf das Wischblatt 14 wirkende Querkräfte in den Wischarm 10 abgeleitet. Auf der dem Anschlag 42 abgewandten Seite liegt die Verbindungseinheit 20 wenigstens abschnittsweise, vorzugsweise weitgehend spielfrei, an dem ihr zugewandten Wandabschnitt 28.
Wie aus der Figur 1 deutlich wird, ist der Rücken 22 in Querrichtung schmaler ausgebildet, als der Gelenkbolzen 30 in Querrichtung lang ist. Dadurch kann erreicht werden, dass das Wischblatt 14 im montierten Zustand seitlich neben dem Wischarm 10 angeordnet ist, wodurch eine insgesamt sehr flach bauende Wischvorrichtung realisiert werden kann.

In der Figur 4 ist eine zweite Ausführungsform eines erfindungsgemäßen Wischarms 100 dargestellt. Der Wischarm 100 weist einen dem Wandabschnitt 28 des Wischarms 10 entsprechenden Wandabschnitt 128 auf, an dem ein Gelenkbolzen 130 entsprechend der Figur 5 mittels einer Nietverbindung angeordnet ist. Der Wandabschnitt 128 überragt freistehend die beiden Seitenwände 126 und 124 des im Querschnitt U-förmig ausgebildeten Wischarms. Bei dem in der Figur 4 dargestellten Wischarm 100 ist der Rücken 122 des Wischarms 100 breiter ausgebildet, als der Gelenkbolzen 130 in Querrichtung lang ist. Hierdurch kann erreicht werden, dass ein an den Gelenkbolzen 130 anzuordnendes Wischblatt teilweise von dem Wischarm 100 abgedeckt wird. Das Wischblatt liegt dann zwischen den beiden Seitenwänden 124 und 126. Ein Wischarm 100 mit einem dargestellten Kopplungsabschnitt 112 hat den Vorteil, dass er mit minimalem Fertigungsaufwand herstellbar ist. Dazu wird eine sehr schmale Wischvorrichtung realisiert, die den Fahrzeuglenker nur unwesentlich behindert.

## Patentansprüche

1. Wischarm (10, 100) einer Wischvorrichtung mit einem Kopplungsabschnitt (12, 112) zur Anbindung eines Flachwischblatts (14), wobei der Wischarm (10) wenigstens abschnittsweise im Querschnitt U-artig, mit einem Rücken (22) und zwei Seitenwänden (24, 26), ausgebildet ist, **dadurch gekennzeichnet, dass** der Kopplungsabschnitt (12, 112) einen in Längsrichtung den Rücken (22) und eine Seitenwand (24) überragenden, freistehenden Wandabschnitt (28) der anderen Seitenwand (26) und einen an diesem Wandabschnitt (28) befestigten Gelenkbolzen (30) zur Kopplung mit einem Verbindungsabschnitt (20) des Wischblatts (14) umfasst.

2. Wischarm (100) nach Anspruch 1, **dadurch gekennzeichnet, dass** der Rücken (122) in Querrichtung breiter ausgebildet ist, als der Gelenkbolzen (130) in Querrichtung lang ist.

3. Wischarm (100) nach Anspruch 2, **dadurch gekennzeichnet, dass** der Rücken (122) ein an dem Wischarm (100) angeordnetes Wischblatt wenigstens weitgehend abgedeckt.

4. Wischarm (100) nach Anspruch 2 oder 3, **dadurch gekennzeichnet, dass** das Wischblatt wenigstens abschnittweise zwischen den Seitenwänden ( 124, 126) des Wischarms (100) angeordnet ist.

5. Wischarm (10) nach Anspruch 1, **dadurch gekennzeichnet, dass** der Rücken (22) in Querrichtung schmaler ausgebildet ist, als der Gelenkbolzen (30) in Querrichtung lang ist.

6. Wischarm (10) nach Anspruch 5, **dadurch gekennzeichnet, dass** der Kopplungsabschnitt (12) einen sich an den Rücken (22) anschließenden, im Querschnitt L-förmigen Ansatz (36) umfasst, der einen sich quer zur Längsrichtung erstreckenden Steg (38) und einen parallel zum Wandabschnitt (28) ausgebildeten Anschlag (40) aufweist.

7. Wischarm (10) nach Anspruch 5 oder 6, **dadurch gekennzeichnet, dass** das Wischblatt (14) im montierten Zustand seitlich neben dem Wischarm (10) angeordnet ist.

8. Wischarm (10, 100) nach einem der vorhergehenden Ansprüche, **dadurch gekennzeichnet, dass** der Gelenkbolzen (30, 130) mit dem Wandabschnitt (28, 128) vernietet ist.

9. Wischvorrichtung umfassend einen Wischarm (10, 100) nach einem der vorhergehenden Ansprüche und ein an dem Kopplungsabschnitt anbindbares Flachwischblatt (14).

## Claims

1. Wiper arm (10, 100) of a wiper device comprising a coupling section (12, 112) for connecting a flat wiper blade (14), wherein the wiper arm (10) is designed to be U-shaped in cross section at least in part, with a back (22) and two side walls (24, 26), **characterised in that** the coupling section (12, 112) comprises a stand-alone wall section (28) of one side wall (26) which protrudes beyond the back (22) and the other side wall (24) in the longitudinal direction, and a hinge pin (30) attached to this wall section (28) for coupling to a connecting section (20) of the wiper blade (14).

2. Wiper arm (100) according to claim 1, **characterised in that** the back (122) is designed to be wider in the transverse direction than the length of the hinge pin (130) in the transverse direction.

3. Wiper arm (100) according to claim 2, **characterised in that** the back (122) at least substantially covers a wiper blade arranged on the wiper arm (100).

4. Wiper arm (100) according to claim 2 or 3, **characterised in that** the wiper blade is arranged at least in part between the side walls (124, 126) of the wiper arm (100).

5. Wiper arm (10) according to claim 1, **characterised in that** the back (22) is designed to be narrower in the transverse direction than the length of the hinge pin (30) in the transverse direction.

6. Wiper arm (10) according to claim 5, **characterised in that** the coupling section (12) comprises a projection (36) which adjoins the back (22), is L-shaped in cross section and has a web (38) extending transversely to the longitudinal direction and a stop (40) formed parallel to the wall section (28).

7. Wiper arm (10) according to claim 5 or 6, **characterised in that** the wiper blade (14) in the assembled state is arranged laterally next to the wiper arm (10).

8. Wiper arm (10, 100) according to one of the preceding claims, **characterised in that** the hinge pin (30, 130) is riveted to the wall section (28, 128).

9. Wiper device comprising a wiper arm (10, 100) according to one of the preceding claims and a flat wiper blade (14) which can be connected to the coupling section.

## Revendications

1. Bras d'essuie-glace (10, 100) d'un dispositif d'essuie-glace comportant une section d'accouplement (12, 112) permettant de relier un balai d'essuie-glace plat (14), moyennant quoi le bras d'essuie-glace (10) est configuré en forme de U en coupe au moins par section, avec un dos (22) et deux parois latérales (24, 26), **caractérisé en ce que** la section d'accouplement (12, 112) comporte une section de paroi (18) isolée, faisant saillie par rapport au dos (22) et à la paroi latérale (24) dans la direction longitudinale, de l'autre paroi latérale (26), et un axe d'articulation (30) fixé sur cette section de paroi (28), permettant l'accouplement avec la section d'assemblage (20) du balai d'essuie-glace (14).

2. Bras d'essuie-glace (100) selon la revendication 1, **caractérisé en ce que** le dos (122) est configuré de telle sorte que sa largeur dans la direction transversale est supérieure à la longueur de l'axe d'articulation (130) dans la direction transversale.

3. Bras d'essuie-glace (100) selon la revendication 2, **caractérisé en ce que** le dos (122) recouvre au moins dans une large mesure un balai d'essuie-glace disposé sur le bras d'essuie-glace (100).

4. Bras d'essuie-glace (100) selon la revendication 2 ou 3, **caractérisé en ce que** le balai d'essuie-glace est disposé au moins par section entre les parois latérales (124, 126) du bras d'essuie-glace (100).

5. Bras d'essuie-glace (10) selon la revendication 1, **caractérisé en ce que** le dos (22) est configuré de telle sorte que sa largeur dans la direction transversale est inférieure à la longueur de l'axe d'articulation (30) dans la direction transversale.

6. Bras d'essuie-glace (10) selon la revendication 5, **caractérisé en ce que** la section d'accouplement (12) comporte un insert en forme de L en coupe, relié au dos (22), lequel insert présente une nervure (38) s'étendant transversalement par rapport à la direction longitudinale et une butée (40) configurée parallèlement par rapport à la section de paroi (28).

7. Bras d'essuie-glace (10) selon la revendication 5 ou 6, **caractérisé en ce que** le balai d'essuie-glace (14) est disposé latéralement à côté du bras d'essuie-glace (10) à l'état monté.

8. Bras d'essuie-glace (10, 100) selon l'une quelconque des revendications précédentes, **caractérisé en ce que** l'axe d'articulation (30, 130) est riveté avec la section de paroi (28, 128).

9. Dispositif d'essuie-glace comportant un bras d'essuie-glace (10, 100) selon l'une quelconque des revendications précédentes et un balai d'essuie-glace plat (14) pouvant être relié à la section d'accouplement.
